(19) 

Europäisches Patentamt

European Patent Office

Office européen des brevets

(11) **EP 2 067 095 B1**

(12) **EUROPÄISCHE PATENTSCHRIFT**

(45) Veröffentlichungstag und Bekanntmachung des Hinweises auf die Patenterteilung:
**24.11.2010 Patentblatt 2010/47**

(21) Anmeldenummer: **07820519.2**

(22) Anmeldetag: **24.09.2007**

(51) Int Cl.:
***G06F 7/72*** *(2006.01)*

(86) Internationale Anmeldenummer:
**PCT/EP2007/060113**

(87) Internationale Veröffentlichungsnummer:
**WO 2008/040655 (10.04.2008 Gazette 2008/15)**

(54) **VERFAHREN ZUM VERSCHLÜSSELTEN DATENAUSTAUSCH UND KOMMUNIKATIONSSYTEM**

METHOD FOR THE ENCRYPTED DATA EXCHANGE AND COMMUNICATION SYSTEM

PROCÉDÉ D'ÉCHANGE CODÉ DE DONNÉES ET SYSTÈME DE COMMUNICATION

(84) Benannte Vertragsstaaten:
**DE ES FR GB IT**

(30) Priorität: **29.09.2006 DE 102006046226**
**03.01.2007 DE 102007001070**

(43) Veröffentlichungstag der Anmeldung:
**10.06.2009 Patentblatt 2009/24**

(73) Patentinhaber: **SIEMENS AKTIENGESELLSCHAFT**
**80333 München (DE)**

(72) Erfinder:
- **BRAUN, Michael**
  **81825 München (DE)**
- **KARGL, Anton**
  **80639 München (DE)**
- **MEYER, Bernd**
  **81739 München (DE)**

(56) Entgegenhaltungen:
**DE-A1- 10 161 138**

- **PAK-KEUNG LEUNG ET AL: "An Optimal Normal Basis Elliptic Curve Cryptoprocessor for Inductive RFID Application" CIRCUITS AND SYSTEMS, 2006. ISCAS 2006. PROCEEDINGS. 2006 IEEE INTERNATIONAL SYMPOSIUM ON KOS, GREECE 21-24 MAY 2006, PISCATAWAY, NJ, USA,IEEE, 21. Mai 2006 (2006-05-21), Seiten 309-312, XP010938413 ISBN: 0-7803-9389-9**
- **HASEGAWA T ET AL: "A PRACTICAL IMPLEMENTATION OF ELLIPTIC CURVE CRYPTOSYSTEMS OVER GF(P) ON A 16-BIT MICROCOMPUTER" PUBLIC KEY CRYPTOGRAPHY. INTERNATIONAL WORKSHOP ON PRACTICE AND THEORY IN PUBLIC KEY CRYPTOGRAPHY, 5. Februar 1998 (1998-02-05), Seiten 182-194, XP000826355**
- **"THE ELLIPTIC CURVE CRYPTOSYSTEM FOR SMART CARDS" ECC WHITEPAPERS, Mai 1998 (1998-05), Seiten 1-9, XP000826349**

EP 2 067 095 B1

## Beschreibung

Die Erfindung betrifft ein Verfahren zum verschlüsselten Datenaustausch zwischen Teilnehmern eines Kommunikationssystems sowie ein Kommunikationssystem.

Die vorliegende Erfindung liegt auf dem Gebiet der Kommunikationstechnik und insbesondere im Bereich der kontaktlosen Kommunikation zum Zwecke der Identifikation. Wenngleich prinzipiell auf beliebige Kommunikationssysteme anwendbar, werden die vorliegende Erfindung sowie die ihr zugrunde liegende Problematik nachfolgend mit Bezug auf so genannte RFID-Kommunikationssysteme und deren Anwendungen erläutert. RFID steht dabei für "Radio Frequency Identification". Zum allgemeinen Hintergrund dieser RFID-Technologie wird auf das "RFID-Handbuch" von Klaus Finkenzeller, Hansa-Verlag, dritte aktualisierte Auflage, 2002, verwiesen.

Bei heute bekannten RFID-Systemen wird typischerweise ein von einer Basisstation (oder Lesestation oder Reader) ausgesendetes elektromagnetisches Signal von einem passiven Transponder (oder Tag) aufgenommen, der daraus die im Transponder benötigte Energie gewinnt. In den meisten auf UHF oder Mikrowellen basierenden RFID-Systemen erfolgt neben dieser unidirektionalen Energieübertragung auch eine typischerweise bidirektionale Datenkommunikation auf der Basis eines so genannten Challenge/Response-Verfahrens. Dabei sendet die Basisstation fortwährend Anfragesignale (Data Request, Challenge) aus, die lediglich dann beantwortet werden, wenn sich ein entsprechender Transponder im Wirkungsbereich dieser Basisstation befindet. In diesem Falle reagiert der sich in der unmittelbaren Umgebung der Basisstation befindliche Transponder mit einem Antwortsignal (Response). Solche RFID-Transponder werden beispielsweise zur Kennzeichnung von Gegenständen, wie z. B. Waren, Dokumenten und dergleichen, verwendet.

Im Unterschied zu einer herkömmlichen drahtgestützten Datenkommunikation erfolgt die Datenkommunikation zwischen Basisstation und einem entsprechenden Transponder nahezu eigenständig und gewissermaßen im Hintergrund, ohne dass ein Benutzer überhaupt anwesend sein muss. D. h. die Datenkommunikation wird aufgenommen, sobald sich ein authentifizierter Transponder im Wirkungsbereich der zugehörigen Basisstation befindet. Während beispielsweise beim Auslesen eines Datenträgers, wie z. B. einer Diskette, einem USB-Stick oder Ähnlichem, dieser von dem Benutzer bewusst in Kontakt mit einem entsprechenden Lesegerät gebracht werden muss und im Falle einer drahtgebundenen Datenkommunikation die Datenkommunikation von dem Benutzer ebenfalls bewusst eingeleitet werden muss, ist dies bei der RFID-basierten drahtlosen Datenkommunikation nicht der Fall.

Dies hat einige signifikante Vorteile, z.B. bei der Identifikation im Logistikbereich, in Warenhäusern, etc. Allerdings hat diese Technologie der RFID-basierten Datenkommunikation auch einige Nachteile, die es bei vielen Anwendungen zu beachten gibt.

Ein solches Problem bezieht sich auf das Auslesen von in einem RFID-Transponder enthaltenen Daten durch einen unberechtigten Nutzer (Angreifer), insbesondere dann, wenn es sich bei diesen Daten um sicherheitskritische Daten handelt. Aus diesen Gründen umfasst ein RFID-basiertes Datenkommunikationssystem typischerweise auch einen Sicherheitsmechanismus, der z. B. die Datenkommunikation dahingehend absichert, dass ein Sicherheitscode von der Basisstation auf das Sendesignal aufmoduliert wird, der dann von den an der Datenkommunikation zugelassenen Transpondern decodiert und ausgewertet werden kann. Nach erfolgreicher Auswertung sendet der an der Datenkommunikation zugelassene Transponder ein Antwortsignal, das ebenfalls einen Sicherheitscode enthält, an die Basisstation zurück, welcher dann zur Authentifikation des Transponders in der Basisstation ausgewertet werden kann. Mittels dieser Authentifikation wird in der Basisstation sichergestellt, dass sich unbemerkt kein unberechtigter Nutzer in die Datenkommunikation einkoppeln und somit sicherheitskritische Daten auslesen kann.

Eine wesentliche Randbedingung bei der Transponder-basierten Datenkommunikation besteht darin, dass eine möglichst einfache und schnelle Datenkommunikation zwischen Basisstation und Transponder stattfindet soll. Dies liegt zum Einen daran, dass der Transponder typischerweise nur über geringe Ressourcen, d. h. einerseits über geringe Energieressourcen und andererseits über geringe Speicher- und Rechenressourcen, verfügt, sodass bei der Authentifikation typischerweise möglichst geringe Datenmengen ausgewertet und authentifiziert werden sollten. Andererseits sollte diese Authentifikation auch möglichst schnell durchgeführt werden, da sich vor allem bei dynamischen RFID-basierten Datenkommunikationssystemen der zu authentifizierende Transponder sehr häufig nur für eine geringe Zeitspanne im Wirkungsbereich der jeweiligen Basisstation befindet. Innerhalb dieser kurzen Zeitspanne muss einerseits eine Datenkommunikationsverbindung aufgebaut werden, diese authentifiziert werden und anschließend der Datenaustausch erfolgen.

Zur Sicherstellung der Datenkommunikation zwischen Basisstation und Transponder erfolgt eine kryptographisch abgesicherte Datenkommunikation. Wesentlich für diese kryptographischen Verschlüsselungsverfahren ist, dass eine Umkehrung, das heißt eine Bestimmung des privaten Schlüssels aus dem öffentlichen Schlüssel, in endlicher Zeit mit den zur Verfügung stehenden Rechenkapazitäten kaum bewältigbar ist.

Es hat sich als vorteilhaft erwiesen, kryptographische Verschlüsselungsalgorithmen basierend auf elliptischen Kurven zu verwenden, da diese eine hohe Sicherheit bei kurzen Schlüssellängen gewähren. Solche kryptographische Verschlüsselungsverfahren auf Basis elliptischer Kurven sind sehr effizient, was insbesondere daran liegt, dass bei diesen Verfahren im Gegensatz zu bekannten kryptographischen Verfahren keine Angriffsmethode mit subexponentieller Laufzeit bekannt ist. Anders ausgedrückt bedeutet dies, dass der Sicherheitsgewinn pro Bit der verwendeten Sicherheitsparameter bei Verfahren auf der Basis elliptischer Kurven höher ist und somit für praktische Anwendungen deutlich kürzere Schlüssellängen verwendet werden können. Somit sind kryptographische Verfahren auf der Basis elliptischer Kurven performanter und benötigen eine geringere Bandbreite zur Übertragung der Systemparameter als andere kryptographische Verfahren bei vergleichbarem Grad an erreichbarer Sicherheit.

Die kryptographischen Verfahren stellen somit einen Kompromiss zwischen einer zu erwartenden Sicherheit und dem rechnerischen Aufwand beim Verschlüsseln von Daten dar. In der Deutschen Patentanmeldung DE 101 61 138 A1 ist dargestellt, dass eine Bestimmung des skalaren Vielfachen eines Punktes allein anhand der X-Koordinate dieses Punktes bereits ohne Hinzuziehen der Y-Koordinate möglich ist. Entsprechende Rechenvorschriften sind für beliebige Körper ebenfalls in dieser Druckschrift beschrieben. Hierdurch lassen sich wesentlich effizientere Implementierungen der Punktarithmetik, zum Beispiel einer Montgomery-Leiter, für die Skalarmultiplikationen, eine geringere Anzahl an Körpermultiplikationen pro Punktaddition und eine geringere Anzahl von Registern für die Punktdarstellung der Zwischenergebnisse erreichen.

Vor diesem Hintergrund besteht die Aufgabe der vorliegenden Erfindung darin, eine Authentifikation für eine drahtlose Datenkommunikation bereitzustellen, für die insbesondere ein geringerer Rechenaufwand bei gleichbleibend hoher Sicherheit benötigt wird und die insbesondere auch schnell ist.

Erfindungsgemäß wird diese Aufgabe durch ein Authentifikationsverfahren mit den Merkmalen des Patentanspruchs 1 und/oder durch ein Kommunikationssystem mit den Merkmalen des Patentanspruchs 17 gelöst.

Demgemäß ist vorgesehen:

Ein Verfahren zum verschlüsselten Datenaustausch zwischen Teilnehmern eines Kommunikationssystems unter Verwendung einer Verschlüsselung auf Basis elliptischer Kurven, bei dem auf eine Anfrage eines ersten Teilnehmers hin von dem zweiten Teilnehmer unter Verwendung eines Zertifikats im zweiten Teilnehmer eine Skalarmultiplikation berechnet wird, wobei lediglich ein Teil des Ergebnisses der Skalarmultiplikation als Antwort zurück zu dem ersten Teilnehmer gesendet wird. Die Erfindung betrifft ein Kommunikationssystem.

Ein Kommunikationssystem zur Authentifikation der Teilnehmer des Kommunikationssystems unter Verwendung eines erfindungsgemäßen Verschlüsselungsverfahrens.

Die der vorliegenden Erfindung zugrunde liegende Idee besteht darin, bei der Authentifikation zwischen zwei Teilnehmern eines Kommunikationssystems und insbesondere bei der Übersendung eines Antwortsignals von einem Transponder zurück zu einer Basisstation diese zurück zu übertragenden Daten zu reduzieren.

Bei der Authentifikation eines Transponders durch eine Basisstation wird typischerweise eine auf einem Challenge-Response-Verfahren basierendes Authentisierungsprotokoll verwendet. Gemäß diesem Authentisierungsprotokoll berechnet beispielsweise der Transponder auf eine Anfrage der Basisstation hin eine Skalarmultiplikation und erhält als Ergebnis eine x-Koordinate in einer zufällig gewählten projektiven Darstellung. Diese projektive Darstellung, die in binärer Darstellung eine Zahl ist, enthält zwei Werte (X, Z), die in binärer Darstellung aneinander gereiht darstellbar sind. Bei bisher bekannten Verfahren wurden von dem Transponder bei der Rückübertragung der Antwort beide Werte, d. h. das Paar (X, Z) der x-Koordinate, als Antwortsignal an die Basisstation zurückgesendet.

Die der vorliegenden Erfindung zugrunde liegende Erkenntnis besteht nun darin, dass von dem Transponder für die Übertragung der projektiven Darstellung der x-Koordinate nicht beide Werte zurück an die Basisstation gesendet werden müssen. Vielmehr reicht es aus, wenn lediglich einer dieser beiden Werte vollständig und der jeweils zweite Wert zumindest teilweise zurückgesendet werden. Auch mit dieser quasi unvollständigen Antwort ist dann die Basisstation noch in der Lage, eine Authentisierung mit relativ hoher Sicherheit vorzunehmen. Der besondere Vorteil liegt hier darin, dass damit die von dem Transponder zurück übertragenen Antwortdaten reduziert werden können, was für die Authentifikation insgesamt die Menge der zu übertragenden Antwortdaten verringert. Dadurch bedingt benötigt der Transponder eine geringere Zeit für die Rückübertragung, der Authentifizierung und der damit verbunden Rechenoperationen. Insgesamt lässt sich damit das gesamte Authentifizierungsverfahren signifikant einfacher und auch schneller gestalten, ohne dass dadurch ein allzu großer Sicherheitsverlust bei der Authentifikation einhergeht.

Beispielsweise überträgt der Transponder von einem der beiden Werte der x-Koordinate lediglich einen Teil, beispielsweise die Hälfte. Erfindungsgemäß wird dies dadurch realisiert, dass beispielsweise lediglich der obere Teil bzw. die obere Hälfte oder auch der untere Teil bzw. die untere Hälfte des entsprechend berechneten Wertes der x-Koordinate zurück übertragen wird. Die Basisstation prüft dann, ob dieser Teil bzw. Hälfte des Wertes mit dem entsprechenden Teil bzw. Hälfte des zu diesem berechneten Wert entsprechenden Wertes übereinstimmt. Lediglich dann, wenn der Teil bzw. die Hälfte der Bits identisch sind, wird seitens der Basisstation der die Antwortdaten sendende Transponder als authentisch akzeptiert.

Das erfindungsgemäße Authentifikationsverfahren mit der Variante der Datenreduktion in bestimmten Anwendungen des Transponders, bei denen der Transponder projektiv dargestellte Koordinaten als Antwort zurück überträgt, hat verschiedene Vorteile:

Die Menge der zu übertragenden Bits der x-Koordinate in der projektiven Darstellung reduziert sich signifikant.

Im oben genannten Fall, bei dem lediglich die Hälfte der Bits eines der beiden Werte übertragen wird, reduziert sich die Gesamtmenge der zu übertragenen Daten dann um ein Viertel.

Die Datenreduktion verursacht in vielen Anwendungen, wie beispielsweise in dem in der vorliegenden Patentanmeldung angegebenen Authentisierungsprotokoll, nur eine vernachlässigbare Reduktion der Sicherheit. Es ist ein bekanntes Resultat der Kryptographie, dass eine für kryptographische Anwendungen geeignete elliptische Kurve über einem endlichen Körper $GF(2^d)$ nur eine Sicherheit von $2^{d/2-1}$ bietet. Das heißt, obwohl Elemente des Körpers mit einer Länge von d Bits verwendet werden, entspricht die Sicherheit dieser Art der Authentifikation unter Verwendung eines öffentlichen Schlüssels nur einer Schlüssellänge von d/2-1. Damit ist es aus Sicht eines unberechtigten Nutzers genauso schwierig, das Authentifikationsverfahren zu durchbrechen und dadurch an den geheimen Schlüssel des Transponders zu gelangen, wie bei dem oben beschriebenen erfindungsgemäßen Authentifikationsverfahren mit reduzierter Datenmenge bei der Antwortrückübertragung eine gültige Antwort bereitzustellen. Je nach Anwendungsfall und dem dort vorgegebenen oder auch benötigten Sicherheitsbedarf ist es möglich, die Anzahl der Bits der vom Transponder an die Basisstation anteilig übertragenen x-Koordinate noch weiter zu reduzieren.

Die nicht übertragenden Bits stellen ein zufällig erzeugtes Geheimnis dar, welches nur dem Transponder und der an der Datenkommunikation beteiligten Basisstation bekannt ist. Diese nicht übertragenen Bits lassen sich beispielsweise als Schlüssel in nachfolgenden Protokollschritten des erfindungsgemäßen Authentifikationsverfahrens verwenden. Das bedeutet, dass bei dem erfindungsgemäßen Authentifikationsverfahren mit Datenreduktion durch nur teilweise Übertragung projektiv dargestellter x-Koordinate das Protokoll zur (einseitigen) Authentisierung zu einem Protokoll zur (einseitigen) Authentisierung mit Schlüsseleinigung erweitert wird.

Bei einer Variante des erfindungsgemäßen Authentifikationsverfahrens kann, falls der Transponder Divisionen im endlichen Körper durchführen und damit die affine Darstellung der Koordinaten der Response berechnen kann, das Authentifikationsverfahrens auch auf den affinen Wert angewendet werden. In diesem Fall reduziert sich die Anzahl der zu übertragenden Bits ebenfalls signifikant, typischerweise auf die Hälfte der zu übertragenden Bits.

Vorteilhafte Ausgestaltungen und Weiterbildungen der Erfindung ergeben sich aus den weiteren Unteransprüchen sowie aus der Beschreibung in Zusammenschau mit den Figuren der Zeichnung.

Die Erfindung wird nachfolgend anhand der in Figuren der Zeichnung angegebenen Ausführungsbeispiele näher erläutert. Dabei zeigen:

Fig. 1a, 1b      Beispiele einer elliptischen Kurve;

Fig. 2      ein Beispiel einer Addition unter Verwendung einer elliptischen Kurve;

Fig. 3      anhand eines Blockschaltbildes den Aufbau eines erfindungsgemäßen Kommunikationssystems;

Fig. 4      ein Ablaufdiagramm zur Darstellung des erfindungsgemäßen Authentifikationsverfahrens auf Basis elliptischer Kurven;

Fig. 5a-5c      schematische Darstellungen zur Erläuterung des Verfahrens zur Datenreduktion der Antwortdaten und des Verfahrens zum Vergleich dieser datenreduzierten Antwortdaten mit berechneten Antwortdaten.

In den Figuren der Zeichnung sind gleiche und funktionsgleiche Elemente, Merkmale und Signale, sofern nichts Anderes ausgeführt ist, mit denselben Bezugzeichen versehen.

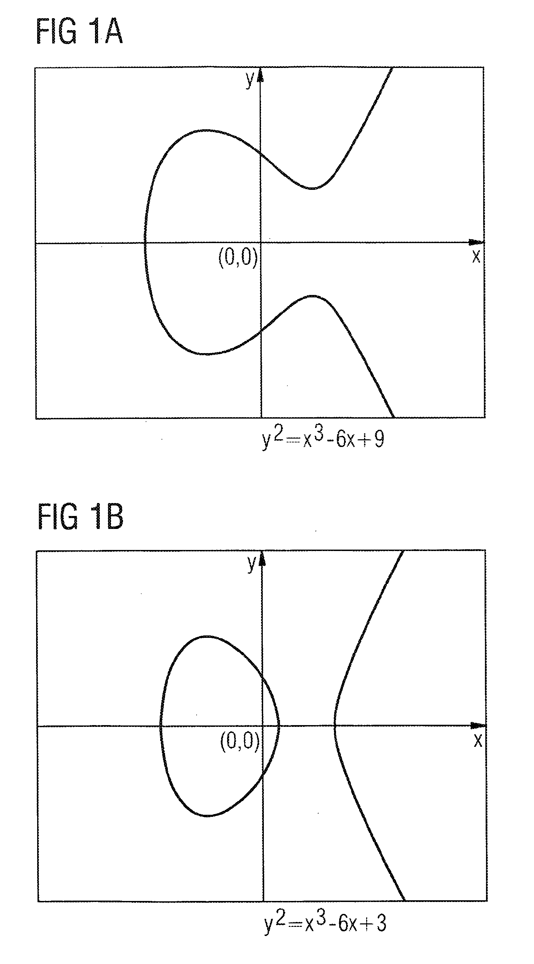

Das erfindungsgemäße Authentifikationsverfahren weist ein neues Sicherheitsprotokoll auf, welches auf einer Arithmetik für elliptische Kurven aufsetzt. Bevor das erfindungsgemäße Authentifikationsverfahren beschrieben wird, werden daher zunächst die wichtigsten Eigenschaften elliptischer Kurven anhand der Fig. 1a und 1b erläutert.

Eine elliptische Kurve über einem endlichen Körper (Galois-Feld) $GF(2^d)$ ist die Nullstellenmenge der kubischen Gleichung

$$y^2 + xy = y^3 + ax^2 + b. \quad (1)$$

x und y bezeichnen hier Variablen und die Koeffizienten a und b mit b≠0 bezeichnen Koeffizienten im Galois-Feld $GF(2^d)$.

In Fig. 1a und Fig. 1b sind beispielhaft zwei elliptische Kurven über den reellen Zahlen dargestellt.

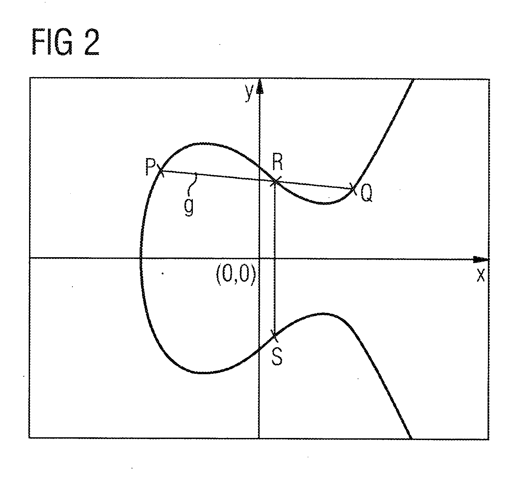

Unter Hinzunahme eines unendlich fernen Punktes als neutrales Element bildet diese Nullstellenmenge eine additive Gruppe, deren Gruppengesetz zumindest bei elliptischen Kurven über den reellen Körpern geometrisch interpretiert werden kann. Eine solche additive Gruppe besteht aus einer Zahlenmenge und einer Addition (Gruppenoperation). Außerdem existiert in dieser Gruppe ein neutrales Element, das bei Addition zu einer Zahl aus der Zahlenmenge dessen Wert nicht ändert (beispielsweise die Null). Weiterhin existiert zu jedem Wert der Zahlenmenge ein inverses Element, sodass bei Addition des entsprechenden Wertes mit dem inversen Element das neutrale Element gewonnen wird. Wesentlich sind dabei zwei Ergebnisse aus der algebraischen Geometrie (siehe Fig. 2):

Jede Gerade schneidet eine elliptische Kurve in drei, nicht notwendigerweise voneinander verschiedenen Punkten. Zu je zwei, nicht notwendigerweise verschiedenen Punkten kann ein dritter Punkt berechnet werden, sodass die Summe der drei Punkte das neutrale Element darstellt. Seien P und Q (mit P≠Q) zwei Punkte und g die Gerade durch diese Punkte P, Q, dann schneidet diese Gerade g die elliptische Kurve in einem dritten Punkt R. Durch Spiegeln von R an der X-Achse erhält man S=P+Q. Für den Fall P=-Q ist die Steigung von g unendlich und der dritte Schnittpunkt R ist der unendlich ferne Punkt.

Analog zur Definition der Skalarmultiplikation in Vektorräumen ist die Skalarmultiplikation auf elliptischen Kurven definiert. Es sei P ein Punkt einer elliptischen Kurve und k sei eine natürliche Zahl. Die Skalarmultiplikation k*P entspricht einer k-maligen Addition von P zu sich selbst. Diese Skalarmultiplikation k*P bildet den wesentlichen Baustein in kryptographischen Systemen basierend auf elliptischen Kurven. Bei kryptographisch starken elliptischen Kurven stellt die Skalarmultiplikation eine Einwegfunktion dar, d. h. sie ist in polynomieller Zeit berechenbar, aber nur in exponentieller Zeit invertierbar. Eine effiziente algorithmische Rekonstruktion des Skalars ist daher schwer vorstellbar. Diese Einwegfunktion bildet die Grundlage für kryptographische Authentifikationsverfahren auf der Basis elliptischer Kurven.

Eine bekannte Methode zur Implementierung solcher Skalarmultiplikationen auf der Basis elliptischer Kurven ist die so genannte Montgomery-Leiter oder auch Montgomery-Algorithmus. Die Montgomery-Leiter lässt sich in der Gestalt implementieren, dass zur Berechnung der x-Koordinate eines skalaren Vielfachen eines Punktes P nur die x-Koordinate von P und ausschließlich Additionen und Multiplikationen in dem Galoisfeld $GF(2^d)$ verwendet werden. Es sind hier keine aufwändigen Inversionen erforderlich. Das nachfolgend beschriebene erfindungsgemäße beidseitige Authentifikationsverfahren basiert auf diesem Montgomery-Algorithmus.

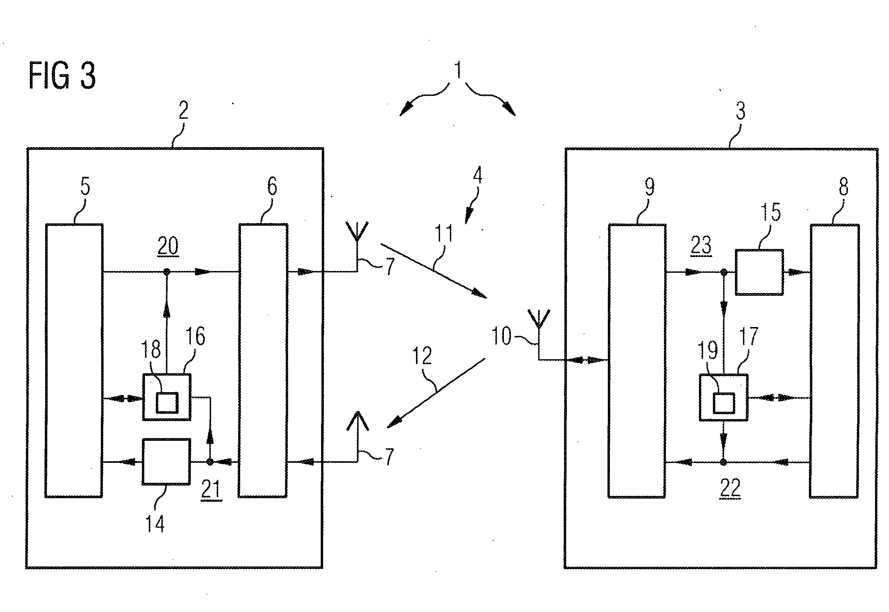

Bevor das erfindungsgemäße zweiseitige Authentifikationsverfahren beschrieben wird, wird nachfolgend anhand des Blockschaltbildes in der Fig. 3 zunächst der prinzipielle Aufbau eines erfindungsgemäßen Kommunikationssystems näher erläutert.

In Fig. 3 ist mit Bezugszeichen 1 ein Kommunikationssystem, beispielsweise ein RFID-Kommunikationssystem, bezeichnet. Das RFID-Kommunikationssystem 1 enthält einen ersten Teilnehmer (Basisstation 2) und zumindest einen zweiten Teilnehmer (Transponder 3) Basisstation 2 und Transponder 3 stehen über eine drahtlose Kommunikationsstrecke 4 in bidirektionaler kommunikativer Verbindung. Das Kommunikationssystem 1 kann zum Beispiel als so genanntes Master-Slave-Kommunikationssystem 1 ausgebildet sein, wobei die Basisstation 2 z. B. als Master und der oder die Transponder 3 z. B. jeweils als Slave fungieren.

Die Basisstation 2 umfasst eine Steuereinrichtung 5, eine Sende-/Empfangseinrichtung 6 sowie eine Sende-/Empfangsantenne 7. In gleicher Weise umfasst auch der Transponder eine Steuereinrichtung 8, eine Sende-/Empfangseinrichtung 9 sowie eine gemeinsame Sende-/Empfangsantenne 10.

Die Sende-/Empfangsantennen 7, 10 können als induktive Spulenantennen oder auch als Dipolantennen ausgebildet sein.

In den jeweiligen Steuereinrichtungen 5, 8 wird der Ablauf der Datenkommunikation gesteuert. Typischerweise enthält diese Steuereinrichtung hierzu eine Recheneinrichtung (Rechenwerk, CPU), in welcher die Rechenoperationen insbesondere für die Authentifikation durchgeführt werden. Die Steuereinrichtungen 5, 8 können beispielsweise als programmgesteuerte Einrichtung, wie zum Beispiel als Mikrokontroller oder Mikroprozessor, ausgebildet sein oder auch in festverdrahteter Logik-Schaltung, wie zum Beispiel als FPGA oder PLD, implementiert sein.

Die Steuereinrichtung 5 der Basisstation 2 ist dazu ausgelegt, über die Antenne 7 hochfrequente Trägersignale 11 zu der Antenne 10 des Transponders 3 zu senden. In gleicher Weise sind die Steuereinrichtung 8 und die Sende-/Empfangseinrichtung 9 des Transponders 3 dazu ausgelegt, auf die gesendeten Trägersignale 11 hin entsprechende Antwortsignale 12 zu der Basisstation 2 zurückzusenden.

Die Basisstation 2 weist ferner eine Auswerteinrichtung 14 auf. Diese Auswerteeinrichtung 14 ist im Empfangspfad 21 der Basisstation 2 angeordnet und dem Empfänger der Sende-/Empfangseinrichtung 6 nachgeschaltet angeordnet. In gleicher Weise weist auch der Transponder 3 eine Auswerteeinrichtung 15 im Empfangspfad 23 des Transponders 3 auf. In den jeweiligen Auswerteeinrichtungen 14, 15 erfolgt die Auswertung der empfangenen Daten einer Datenkommunikation. Insbesondere wird dort auch eine Demodulierung und Decodierung der empfangenen Daten vorgenommen.

Erfindungsgemäß weist nun sowohl die Basisstation 2 als auch der Transponder 3 ein Authentifikationsmodul 16, 17 auf, welche zwischen der jeweiligen Sende-/Empfangseinrichtung 6, 9 und Steuereinrichtung 5, 8 der Basisstation 2 bzw. des Transponders 3 angeordnet sind. Diese Authentifikationsmodule 16, 17 sind hier als gesonderte Module ausgebildet. Vorzugsweise ist ein jeweiliges Authentifikationsmodul 16, 17 jedoch Bestandteil der jeweiligen Steuereinrichtung 5, 8.

Ein Authentifikationsmodul 16, 17 weist ferner einen Speicher 18, 19 auf, in welchem beispielsweise Daten, Schlüssel oder dergleichen, die für die Authentifikation erforderlich sind oder zwischengespeichert werden müssen, abgelegt sind. Die Speicher 18, 19 enthalten typischerweise einen RAM-Speicher, in dem z. B. Rechenergebnisse abgelegt sind. Zusätzlich oder alternativ können diese Speicher 18, 19 auch einen EEPROM-Speicher aufweisen, in welchen Systemparameter, Parameter der verschiedenen Kommunikationsteilnehmer, wie z. B. ein teilnehmerspezifischer privater Schlüssel, ein öffentlicher Schlüssel, ein teilnehmerspezifisches Zertifikat oder dergleichen, abgelegt sind.

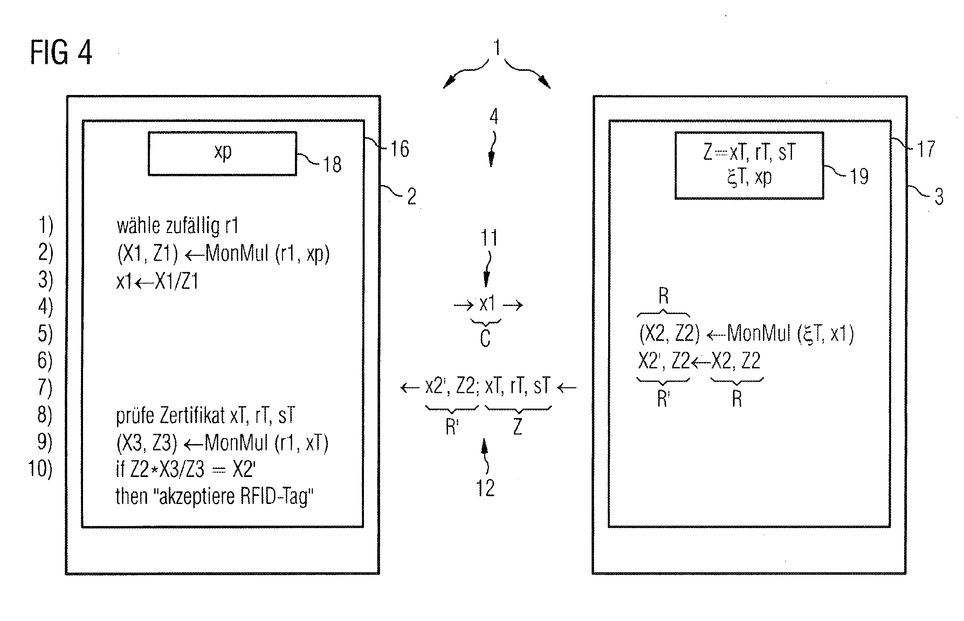

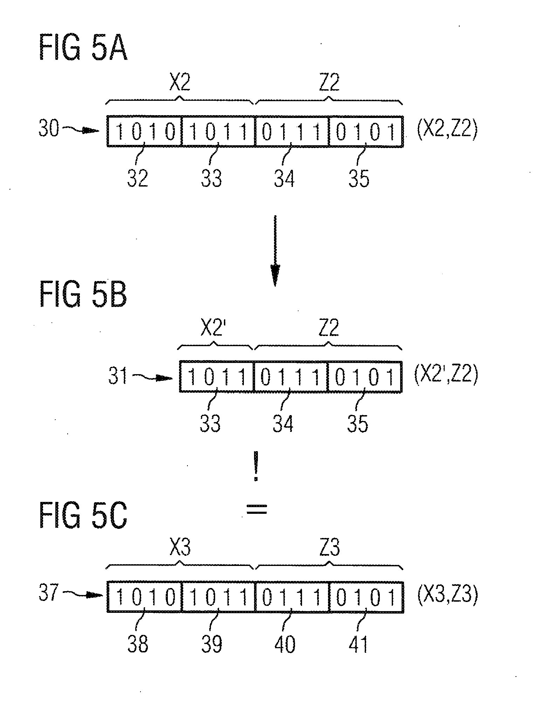

Das Prinzip des erfindungsgemäßen Authentifikationsverfahrens (oder Authentifikationsprotokoll) wird beispielhafte mit Bezug auf die schematischen Darstellungen in den Fig. 4 und 5 erläutert.

Fig. 4 zeigt schematisch die Basisstation 2 und den Transponder 3 des Kommunikationssystems 1, wobei dort lediglich die Authentifikationsmodule 16, 17 und die Speichereinrichtungen 18, 19 innerhalb dieser Einrichtungen 2, 3 dargestellt sind. Es sei angenommen, dass in der basisstationsseitigen Speichereinrichtung 18 öffentliche Schlüssel hinterlegt sind und dass in der Speichereinrichtung 19 des Transponders 3 dessen Zertifikat Z, der transponderseitige geheime Schlüssel sowie gegebenenfalls der öffentliche Schlüssel hinterlegt sind.

Nachfolgend wird ein Beispiel des erfindungsgemäßen Authentifikationsverfahren auf Basis elliptischer Kurven anhand des Ablaufdiagramms in Fig. 4 beschrieben.

Als Systemparameter, also als Parameter, die für das gesamte Kommunikationssystem 1 und damit für die gesamte Authentifikation gelten, werden folgende Parameter vorgegeben.

- Es wird eine geeignete elliptische Kurve vorgegeben.
- xp bezeichnet eine affine x-Koordinate des Basispunktes P auf der elliptischen Kurve.
- xs bezeichnet einen öffentlichen, also der Basisstation und dem Transponder bekannten Schlüssel zur Signaturverifikation.

Für den Transponder 3 sind folgende Parameter vorgesehen:

- $\xi T$ bezeichnet den transponderseitigen geheimen Schlüssel, den also die Basisstation 2 nicht kennt.
- xT,rT,sT bezeichnen das Zertifikat Z des Transponders 2, wobei xT den öffentlichen Schlüssel (affine x-Koordinate des Punktes T=$\xi$T*P) und rT,sT die Signatur von xT, verifizierbar mit dem öffentlichen Schlüssel xs, bezeichnen.

Das in Fig. 4 dargestellte Authentifikationsverfahren wird wie folgt durchgeführt:

In den Schritten 1) - 3) erzeugt die Basisstation 2 die Anfrage C = x1 (C = Challenge). Hierzu wird zufällig ein Wert r1 gewählt. Anschließend berechnet die Basisstation 2 aus diesem Wert r1 sowie dem Systemparameter xp die Anfrage (X1, Z1), welche die projektive x-Koordinate des Punktes P1 (P1=r1*P) darstellt. Diese beiden Werte X1, Z1 werden dividiert, wodurch die Anfrage x1 abgebildet wird. Diese Anfrage x1 stellt die x-Koordinate des Punkte P1 = r1 * P für einen zufälligen Skalar dar.

Die Basisstation 2 sendet diese Anfrage C = x1 im Schritt 4) an den Transponder 3.

Im Schritt 5) erfolgt eine Berechnung der Antwort R (R = Response). Hier berechnet der Transponder 3 zur Anfrage x1 die entsprechenden Antwortdaten R= (X2, Z2), die die projektiven x-Koordinaten des Punktes P2=$\xi$T*P1=$\xi$T* (r1*P) darstellen.

Im Schritt 7) werden die von dem Transponder 3 erzeugten Antwortdaten R' = (X2', Z2) zusammen mit dem Zertifikat Z = xT,rT,sT des Transponders 3 an die Basisstation 2 zurückgesendet. Bei bisher bekannten Verfahren war R'=R = (X2, Z2)

Die Basisstation 2 prüft das Zertifikat Z = xT,rT,sT des Transponders 3 im Schritt 8). Ist das Zertifikat Z nicht gültig, dann lehnt die Basisstation 2 den Transponder 3 als nicht authentisch ab.

In den Schritten 9) und 10) überprüft die Basisstation 2 die Antwort des Transponders 3. Die Basisstation 2 berechnet die berechnete projektive x-Koordinate (X3, Z3) des Punkts P3=r1*T=r1*($\xi$T*P) und prüft dabei, ob die vom Transponder 3 übertragenen Daten (X2', Z2) mit den in der Basisstation 2 erzeugten Daten (X3, Z3) projektive Koordinaten des gleichen Punktes sein können. Dies ist genau dann der Fall, wenn im Falle dass R'= R für die Skalarmultiplikationen gilt:

$$X3*Z2=X2'*Z3.$$

Gilt dieser Zusammenhang, dann ist der Transponder 3 authentisch. Ist dies nicht der Fall, dann lehnt die Basisstation 2 den die Antwortdaten R' sendenden Transponder 3 als nicht authentisch ab.

Wesentlich ist hier, dass die Erzeugung der Anfrage C und der Antwort R, R' sowie die entsprechenden Zertifikate Z so vorgegeben werden, dass das entsprechende Authentifikationsprotokoll auf der Basis elliptischer Kurven über dem Galois-Feld GF($2^d$) durchgeführt werden kann.

Bei bisher bekannten Verfahren wurde die gesamte x-Koordinate (X2, Z2) des Punktes P2 zurück zur Basisstation übertragen, d. h. von dieser x-Koordinate wurden beide Werte X2, Z2 der Antwort R vollständig zurück übertragen. Damit hat sich nach dem Verfahrensschritt 5) unmittelbar der Schritt 7) angeschlossen. Erfindungsgemäß ist nun zwischen den Schritten 5) und 7) ein zusätzlicher Verfahrensschritt 6) vorgesehen. Dieser zusätzliche Verfahrensschritt 6) bezeichnet einen Datenreduktionsschritt. Bei diesem Verfahrensschritt 6) werden die vom Transponder 3 erzeugten Antwortdaten R = (X2, Z2), welche eine zufällig gewählte projektive Darstellung der x-Koordinate des Punktes P2 darstellen, Daten reduziert. Erfindungsgemäß wird hier bei einem dieser beiden Werte (X2, Z2) im Verfahrensschritt 6) also eine Datenreduktion vorgenommen.

Im Ausführungsbeispiel in der Fig. 5 sei angenommen, dass bei dem ersten Wert X2 der projektiven Darstellung der x-Koordinate (X2, Z2) eine Datenreduktion vorgenommen wird, sodass die x-Koordinate nunmehr die beiden Werte (X2', Z2) aufweist und X2' einen gegenüber dem Wert X2 datenreduzierten Inhalt aufweist. Diese datenreduzierte Antwort R' = (X2', Z2) wird anschließend im Verfahrenschritt 7) von dem Transponder 3 an die Basisstation 2 zusammen mit dem Zertifikat Z des Transponders 3 gesendet.

Es versteht sich von selbst, dass statt einer Datenreduktion des ersten Wertes X2 der x-Koordinate zusätzlich oder alternativ auch eine Datenreduktion des jeweils zweiten Wertes Z2 vorgenommen werden kann.

Die Basisstation 2 prüft anschließend, ob die in der Basisstation 2 berechnete Zahl (X3, Z3) mit der vom Transponder 3 gesendeten Antwort R' übereinstimmt. Da diese Antwort R' = (X2', Z2) aber nicht vollständig ist, sondern datenreduziert vorliegt, wird lediglich der entsprechende Teil des Terms X3*Z2/Z3 mit der Komponente der Antwort X2' überprüft. Nur wenn dieser entsprechende Teil der Zahl X3*Z2/Z3 mit X2' übereinstimmt, dann wird der Transponder 3 von der Basisstation 2 als authentisch akzeptiert.

Nachfolgend wird dieses Verfahren zur Datenreduktion sowie das entsprechende Verfahren zum Vergleich dieser datenreduzierten Werte anhand schematischen Darstellungen in den Fig. 5a-5c kurz erläutert:

Fig. 5a zeigt dabei die mit dem Verfahrensschritt 5) erzeugte x-Koordinate bzw. Zahl 30. In Fig. 5a ist zunächst die Struktur der Zahl 30 dargestellt. Diese Zahl 30 enthält zwei Zahlenwerte X2, Z2. Diese x-Koordinate 30 und dabei deren Werte X2, Z2 sind hier in binärer Codierung dargestellt. Es sei angenommen, dass jeder der beiden Werte X2, Z2 acht Bit breit ist und diese beiden acht Bit breiten Werte X2, Z2 unmittelbar aneinander angeordnet sind. Die gesamte x-Koordinate 30 ist somit 16 Bit breit. Der Wert X2 dieser Zahl 30 ist im gezeigten Beispiel unterteilt in eine obere, vier Bit breite Hälfte 32 mit der Bitfolge 1010 und eine untere vier Bit breite Hälfte 33 mit der Bitfolge 1011. Auch der Wert Z2 der Zahl 30 weist zwei Bithälften 34, 35 mit den Bitfolgen 0111 und 0101 auf.

Im Verfahrensschritt 6) wird aus der Zahl 30 eine datenreduzierte Zahl 31 mit den Werten X2', Z2 generiert. Hierzu wird beispielsweise die obere Hälfte 32 des Wertes X2 für die Erzeugung der datenreduzierten Zahl 31 vernachlässigt, d. h. die datenreduzierte Zahl 31 weist lediglich die untere Hälfte 33 des Wertes X2 sowie den vollständigen Wert Z2 auf. Nach der Datenreduktion im Schritt 6) enthält die datenreduzierte x-Koordinate 31 lediglich die untere Hälfte 33 des Wertes X2 sowie beide Hälften 34, 35 des Wertes Z2. Die obere Hälfte 32 des Wertes X2 ist nun nicht mehr Bestandteil der datenreduzierten x-Koordinate 31 und wird somit auch nicht von dem Transponder 3 zu der Basisstation 2 zurück übertragen.

Im gezeigten Beispiel der Fig. 5 wurde für die datenreduzierte x-Koordinate 31 die obere Hälfte 32 vernachlässigt. Denkbar wäre selbstverständlich auch, hier die untere Hälfte 33 des Wertes X2 oder eine der beiden Hälften 34, 35 des Wertes Z2 zu vernachlässigen. Darüber hinaus wurde jeweils genau die Hälfte 32 des Wertes X2 und damit vier Bits des acht Bit Inhalts des Wertes X2 vernachlässigt. Denkbar wäre hier eine beliebige von 0 verschiedene Datenreduktion des Wertes X2, d. h. es wäre auch denkbar, beispielsweise lediglich ein Bit bis zu sieben Bits des Wertes X2 für die Generierung der datenreduzierten x-Koordinate zu vernachlässigen.

Anhand der Fig. 5c wird nun der Verfahrensschritt 10) beschrieben. In Fig. 5c ist die Struktur der x-Koordinate bzw. der Zahl 37 dargestellt, die die Werte X3, Z3 enthält. Die Werte X3, Z3 weisen in entsprechender Weise jeweils obere und untere Bit-Hälften 38 - 41 auf.

Sofern die beiden x-Koordinaten der Zahlen 30, 37 einander entsprechen, dann muss gelten (X2, Z2) = (X3, Z3), d. h. die binäre Zahl 30 mit den aneinander gereihten binären Werten X2, Z2 entspricht der binären Zahl 37 mit den entsprechend aneinander gereihten binären Werten X3, Z3.

Bei der Authentizitätsprüfung wird nun nicht die Zahl 37 mit der ursprünglichen Zahl 30 verglichen, sondern die Zahl 37 kann lediglich mit der gesendeten und von der Basisstation 2 empfangenen Daten reduzierten Zahl 31 verglichen werden. Da allerdings die Bit-Breiten dieser beiden Zahlen 31, 37 verschieden sind, werden lediglich Teile der Zahl 31 mit den entsprechenden Teilen der Zahl 37 verglichen. Das bedeutet, dass die obere Hälfte 32 des Wertes X2, welche eben in der datenreduzierten Zahl 31 nicht enthalten ist, auch nicht mit der oberen Hälfte 38 des Wertes X3 der Zahl 37 verglichen wird. Somit werden lediglich die Abschnitte 33 - 35 der Zahl 31 mit den entsprechenden 39 - 41 der Zahl 37 verglichen, sodass geprüft wird, ob der Abschnitt 33 dem Abschnitt 39, der Abschnitt 34 dem Abschnitt 40 und der Abschnitt 35 mit dem Abschnitt 41 entspricht.

Im vorliegenden Fall der Fig. 5 sind die Bit-Inhalte der Abschnitte 33 - 35 identisch mit den jeweiligen Bit-Inhalten der Abschnitte 39 - 41, sodass in diesem Fall die Basisstation 2 den entsprechenden Transponder 3, der die datenreduzierte Zahl 31 gesendet hat, als authentisch identifiziert. Dies, obgleich der obere Abschnitt 32 des Wertes X2 nicht mit dem oberen Abschnitt 38 des entsprechenden Wertes X3 verglichen wird. Man geht hier von der Erkenntnis aus, dass insbesondere bei sehr großer BitBreite der zu vergleichenden Zahlen 30, 37 es bereits ausreicht, lediglich einen Teil dieser Werte zu übertragen und mit dem entsprechenden Teil des zu vergleichenden Wertes X3, Z3 zu vergleichen. Stimmen diese miteinander verglichenen Abschnitte überein, dann kann man mit sehr großer Wahrscheinlichkeit davon ausgehen, dass diese entsprechenden Werte X2, X3 und damit auch die entsprechenden Zahlen 30, 37 auch identisch sind.

Obgleich die vorliegende Erfindung vorstehend anhand eines bevorzugten Ausführungsbeispiels beschrieben wurde, ist sie darauf nicht beschränkt, sondern lässt sich auf mannigfaltige Art und Weise modifizieren.

So sei die Erfindung insbesondere nicht ausschließlich auf RFID-Systeme beschränkt, sondern lässt sich auch beispielsweise auf die Einzelteilerkennung (Item-Identification) erweitern. Häufig müssen solche Teile nicht eindeutig erkannt werden. Hier reicht es auch häufig aus, dass das Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines Sensors auf. Die Erfindung betrifft also auch ausdrücklich solche Sensoren, bei denen eine Kommunikation zum Auslesen und Beschreiben von Daten eines Datenträgers beziehungsweise Sensors vorgenommen werden.

Auch soll sich die Erfindung auf beliebige Datenkommunikationssysteme beziehen, die nicht notwendigerweise RFID-Systeme sind und die auch nicht notwendigerweise drahtlos ausgebildet sind.

In den Fig. 3 und 4 wurde der besseren Übersichtlichkeit halber der Aufbau des RFID-Systems und insbesondere des Transponders und der Basisstation bewusst stark vereinfacht dargestellt. Es versteht sich von selbst, dass die Basisstation und der entsprechende Transponder die für eine Datenkommunikation zwischen Basisstation und Transponder erforderlichen Funktionseinheiten, wie Demodulator, Modulator, Energieversorgung, Synchronisationseinrichtung, Dekodierer und dergleichen, ebenfalls enthalten kann.

In den Fig. 3 und 4 wurde jeweils zwischen Steuereinrichtung, Auswerteeinrichtung und Authentifikationsmodul unterschieden. Es versteht sich von selbst, dass diese Einrichtungen oder Teile davon z.B. Bestandteil der Steuereinrichtung sein können oder auch getrennt davon ausgebildet sein können.

Ebenfalls sei darauf hingewiesen, dass sowohl die Basisstation als auch der Transponder eine einzige Sende-/Empfangseinrichtung und eine zugehörige Sende-/Empfangsantenne aufweisen können. Denkbar wäre selbstverständlich auch, dass die Basisstation und/oder der Transponder getrennte Sende/Empfangseinrichtungen und insbesondere eine Sendeantenne und eine davon getrennte Empfangsantenne aufweisen können.

Das vorstehend beschriebene Datenkommunikationssystem und Datenkommunikationsverfahren wurden anhand des Prinzips "Reader-talks-first"-Prinzip beschrieben. Denkbar wäre natürlich auch das Prinzip "Tag-talks-first", bei dem die Basisstation zunächst auf eine Anfrage eines Transponders wartet. Allerdings weist dieses zweit genannte Prinzip eine schlechtere Reaktionszeit auf, so dass vor allem bei modernen so genannten "long-range" Datenkommunikationssystemen, wie sie zum Beispiel bei RFID eingesetzt werden, vorzugsweise das "Reader-talks-first"-Prinzip eingesetzt wird.

Es versteht sich von selbst, dass das anhand von Fig. 5 beschriebene erfindungsgemäße Authentifikationsverfahren lediglich beispielhaft zu verstehen ist. Selbstverständlich ließen sich dort die einzelnen Verfahrensschritte und angewendeten mathematischen Operationen auch im Rahmen der Erfindung abwandeln und modifizieren, beispielsweise durch funktionsgleiche oder alternative Verfahrensschritte.

Ferner sei darauf hingewiesen, dass die angegebenen Zahlenangaben und Bitbreiten lediglich beispielhaft zu verstehen sind und die Erfindung jedenfalls nicht darauf beschränken sollen. Insbesondere wäre es auch denkbar, eine größere oder eine kleinere Bitbreite für die jeweiligen Werte zu verwenden. Darüber hinaus müssen die verschiednen Abschnitte eines Wertes auch nicht eine gleiche Bitbreite aufweisen, sondern können unterschiedlich sein. Das gleiche gilt für die Bitbreite der beiden Werte X, Z einer jeweiligen projektiven x-Koordinate.

**Patentansprüche**

1. Authentifizierungsverfahren in einem Kommunikationssystem (1) zur Authentifizierung eines zweiten Teilnehmers (3) gegenüber einem ersten Teilnehmer (2) unter Verwendung einer Kryptographie auf Basis elliptischer Kurven, bei dem auf eine Anfrage des ersten Teilnehmers (2) hin von dem zweiten Teilnehmer (3) eine erste Skalarmultiplikation berechnet wird,
   wobei die Antwort die x-Koordinate eines Punktes auf der elliptischen Kurve enthält und diese x-Koordinate in projektiver Darstellung und in binärer Form vorliegt,
   **dadurch gekennzeichnet, dass**
   lediglich ein Teil des Ergebnisses der Skalarmultiplikation als Antwort zurück zu dem ersten Teilnehmer (2) gesendet wird, indem lediglich ein Teil der Bits der in der Antwort enthaltenen x-Koordinate gesendet wird.

**2.** Verfahren nach Anspruch 1,
**dadurch gekennzeichnet,**
**dass** die Koordinate des Punktes in binärer Darstellung eine Zahl ist, welche einen ersten und einen zweiten Wert enthält, die in binärer Darstellung aneinander gereiht darstellbar sind.

**3.** Verfahren nach Anspruch 2,
**dadurch gekennzeichnet,**
**dass** lediglich ein Teil der Bits zumindest eines der beiden Werte zurück gesendet wird.

**4.** Verfahren nach Anspruch 2 oder 3,
**dadurch gekennzeichnet,**
**dass** die Hälfte der Bits zumindest eines der beiden Werte zurück gesendet wird.

**5.** Verfahren nach einem der Ansprüche 2 bis 4,
**dadurch gekennzeichnet,**
**dass** bezogen auf das MSB-Bit ein oberer Bitbereich der Bits, insbesondere eine obere Hälfte der Bits zumindest eines der beiden Werte zurück gesendet wird.

**6.** Verfahren nach einem der vorhergehenden Ansprüche,
**dadurch gekennzeichnet,**
**dass** der erste Teilnehmer (2) die empfangene Antwort des zweiten Teilnehmers (3) auf deren Authentizität prüft.

**7.** Verfahren nach einem der vorhergehenden Ansprüche,
**dadurch gekennzeichnet,**
**dass** der erste Teilnehmer (2) prüft, ob die in der Antwort enthaltenen Daten und die Daten des Ergebnisses einer zweiten Skalarmultiplikation Koordinaten des gleichen Punktes sind.

**8.** Verfahren nach einem der vorhergehenden Ansprüche,
**dadurch gekennzeichnet,**
**dass** der erste Teilnehmer (2) die in der Antwort enthaltenen Daten mit einem Ergebnis einer zweiten Skalarmultiplikation vergleicht und dass der erste Teilnehmer (2) den zweiten Teilnehmer (3) als authentisch akzeptiert, sofern entsprechende Daten der Antwort und des Ergebnisses der zweiten Skalarmultiplikation miteinander übereinstimmen.

**9.** Verfahren nach Anspruch 8,
**dadurch gekennzeichnet,**
**dass** für den Vergleich der Daten der Antwort mit dem Ergebnis der zweiten Skalarmultiplikation lediglich diejenigen Teile des Ergebnisses der zweiten Skalarmultiplikation verwendet werden, die dem Teil der von dem zweiten Teilnehmer (3) an den ersten Teilnehmer (2) gesendeten Antwort entsprechen.

**10.** Verfahren nach einem der vorhergehenden Ansprüche,
**dadurch gekennzeichnet,**
**dass** derjenige Teil des Ergebnisses der ersten Skalarmultiplikation, der nicht als Antwort zurück übertragen wird, ein zufällig erzeugtes und zumindest einem der beiden Teilnehmer (2, 3), vorzugsweise beiden Teilnehmern (2, 3) bekanntes Ergebnis darstellt, welches als geheimer Schlüssel in nachfolgenden Verfahrensschritten verwendbar ist.

**11.** Verfahren nach einem der vorhergehenden Ansprüche,
**dadurch gekennzeichnet,**
**dass** das Verfahren ein auf einem Challenge-Response-Verfahren basierendes Authentifizierungsverfahren zur Authentifizierung des zweiten Teilnehmers (3) gegenüber dem ersten Teilnehmer (2) und/oder umgekehrt ist.

**12.** Verfahren nach einem der vorhergehenden Ansprüche,
**dadurch gekennzeichnet,**
**dass** die Anfrage des ersten Teilnehmers (2) unabhängig von dem Schlüssel des zweiten Teilnehmers (3) ist.

**13.** Verfahren nach einem der vorhergehenden Ansprüche,
**dadurch gekennzeichnet,**
**dass** als Systemparameter des Kommunikationssystems (1) eine für kryptographische Verfahren geeignete elliptische Kurve und eine affine x-Koordinate eines Basispunktes der elliptischen Kurve und ein öffentlicher Schlüssel zur Signaturprüfung bereitgestellt werden.

**14.** Verfahren nach einem der vorhergehenden Ansprüche,
**dadurch gekennzeichnet,**
**dass** als Parameter des zweiten Teilnehmers (3) lediglich ein dem zweiten Teilnehmer (3) bekannter Schlüssel und ein Zertifikat des zweiten Teilnehmers (3) bereitgestellt werden.

**15.** Verfahren nach Anspruch 14,
**dadurch gekennzeichnet,**
**dass** von dem zweiten Teilnehmer (3) zusammen mit der Antwort das Zertifikat des zweiten Teilnehmers übertragen wird, welches im ersten Teilnehmer auf dessen Gültigkeit unter Verwendung eines öffentlichen, beiden Teilnehmern bekannten Schlüssels durchgeführt wird.

**16.** Kommunikationssystem (1) zur Authentifikation der Teilnehmer (2, 3) des Kommunikationssystems (1) unter Verwendung einer Kryptographie nach einem der vorherigen Ansprüche.

**17.** System nach Anspruch 16,
**dadurch gekennzeichnet,**
**dass** ein erster Teilnehmer (2) und zumindest ein zweiter Teilnehmer (3) vorgesehen sind, die in datenkommunikativer Verbindung (4) zueinander stehen, wobei der erste und zweite Teilnehmer (2, 3) für eine Authentifikation jeweils ein Authentifikationsmodul (16, 17) aufweisen.

**18.** System nach Anspruch 17,
**dadurch gekennzeichnet,**
**dass** das Authentifikationsmodul (16, 17) eines jeweiligen Teilnehmers (2, 3) eine Recheneinrichtung aufweist, die für Berechnungen, Prüfungen und Authentifikationen innerhalb des jeweiligen Authentifikationsmoduls (16, 17) vorgesehen sind.

**19.** System nach einem der vorhergehenden systembezogenen Ansprüche,
**dadurch gekennzeichnet,**
**dass** jeder Teilnehmer (2, 3) einen Speicher (18, 19) aufweist, in dem die Systemparameter sowie die jeweils diesem Teilnehmer (2, 3) zugehörigen Parameter abgelegt sind.

**20.** System nach einem der vorhergehenden systembezogenen Ansprüche,
**dadurch gekennzeichnet,**
**dass** die ersten und zweiten Teilnehmer (2, 3) Kommunikationsteilnehmer des Kommunikationssystems (1), insbesondere eines als RFID-Systems ausgebildeten Kommunikationssystems (1), sind.

**21.** System nach einem der vorhergehenden systembezogenen Ansprüche,
**dadurch gekennzeichnet,**
**dass** der erste Teilnehmer (2) eine Basisstation (2) und der zweite Teilnehmer (3) ein Transponder (3), insbesondere ein passiver oder semipassiver Transponder (3), ist.

**Claims**

**1.** Authentication method in a communication system (1) for authenticating a second user (3) to a first user (2) using elliptic curve cryptography, wherein, when challenged by a first user (2), a second user (3) calculates a first scalar multiplication,
with the response containing the x-coordinate of a point on the elliptic curve and this x-coordinate being present in projective representation and in binary form,
**characterised in that**
only part of the result of the scalar multiplication is transmitted back to the first user (2) as a response by only part of the bits of the x-coordinate contained in the response being sent.

**2.** Method according to claim 1, **characterized in that**, in binary notation, the coordinate of the point is a number which contains a first and a second value which can be represented as a binary sequence.

**3.** Method according to claim 2,
**characterised in that** only a part of the bits of at least one of the two values is transmitted back.

**4.** Method according to claim 2 or 3,
**characterised in that** half of the bits of at least one of the two values is transmitted back.

**5.** Method according to one of claims 2 to 4,
**characterised in that**, referred to the MSB bit, an upper bit range of the bits, in particular an upper half of the bits of at least one of the two values, is transmitted back.

**6.** Method according to one of the preceding claims,
**characterized in that** the first user (2) checks the response received from the second user (3) for its authenticity.

**7.** Method according to one of the preceding claims,
**characterized in that** the first user (2) checks whether the data contained in the response and the data of the result of a second scalar multiplication are coordinates of the same point.

**8.** Method according to one of the preceding claims,
**characterized in that** the first user (2) compares the data contained in the response with a result of a second scalar multiplication and that the first user (2) accepts the second user (3) as authentic provided that corresponding data of the response and of the result of the second scalar multiplication coincide with one another.

**9.** Method according to claim 8,
**characterised in that** only those parts of the result of the second scalar multiplication which correspond to the part of the response transmitted by the second user (3) to the first user (2) are used for comparing the response data with the result of the second scalar multiplication.

**10.** Method according to one of the preceding claims,
**characterized in that** the part of the result of the first scalar multiplication that was not transmitted back as a response represents a randomly generated result known to at least one of the two users (2, 3), preferably both users (2, 3) and which can be used as a secret key in subsequent steps.

**11.** Method according to one of the preceding claims,
**characterized in that** the method is an authentication method based on a challenge-response procedure for authenticating the second user (3) to the first user (2) and/or vice versa.

**12.** Method according to one of the preceding claims,
**characterized in that** the challenge of the first user (2) is independent of the key of the second user (3).

**13.** Method according to one of the preceding claims,
**characterized in that** an elliptic curve suitable for cryptographic methods and an affine x-coordinate of a base point of the elliptic curve and a public key for signature checking are provided as system parameters of the communication system (1).

**14.** Method according to one of the preceding claims,
**characterized in that** only a key known to the second user (3) and a certificate of the second user (3) are provided as parameters of the second user (3).

**15.** Method according to claim 14,
**characterised in that** the second user's certificate is transmitted by the second user (3) along with the response, this certificate being checked for validity in the first user using a public key known to both users.

**16.** Communication system (1) for authenticating the users (2, 3) of the communication system (1) using cryptography according to one of the preceding claims.

**17.** System according to claim 16
**characterized in that** a first user (2) and at least one second user (3) which are connected via a data communications link (4) are provided, the first and second user (2, 3) each having an authentication module (16, 17) for performing authentication.

18. System according to claim 17,
**characterised in that** the authentication module (16, 17) of a respective user (2, 3) has a computing device for performing calculations, checks and authentications within the respective authentication module (16, 17).

19. System according to one of the preceding system-related claims,
**characterised in that** each user (2, 3) has a memory (18, 19) in which the system parameters and the parameters associated in each case with this user (2, 3) are stored.

20. System according to one of the preceding system-related claims,
**characterised in that** the first and second users (2, 3) are communication users of the communication system (1), in particular of a communication system (1) implemented as an RFID system.

21. System according to one of the preceding system-related claims,
**characterised in that** the first user (2) is a base station (2) and the second user (3) is a transponder (3), in particular a passive or semi-passive transponder (3).

**Revendications**

1. Procédé d'authentification dans un système de communication (1) pour l'authentification d'un second abonné (3) vis-à-vis d'un premier abonné (2) en utilisant une cryptographie basée sur des courbes elliptiques, dans lequel le second abonné (3) effectue une première multiplication scalaire en réponse à une demande du premier abonné (2), la réponse contenant la coordonnée x d'un point sur la courbe elliptique et cette coordonnée x étant donnée en représentation projective et sous forme binaire, **caractérisé en ce qu'**une partie seulement du résultat de la multiplication scalaire est renvoyée comme réponse au premier abonné (2) en envoyant seulement une partie des bits de la coordonnée x contenue dans la réponse.

2. Procédé selon la revendication 1, **caractérisé en ce que** la coordonnée du point en représentation binaire est un nombre qui contient une première et une seconde valeurs qui peuvent être représentées, en représentation binaire, sous forme de série binaire.

3. Procédé selon la revendication 2, **caractérisé en ce qu'**une partie seulement des bits d'au moins une des deux valeurs est renvoyée.

4. Procédé selon la revendication 2 ou 3, **caractérisé en ce que** la moitié des bits d'au moins une des deux valeurs est renvoyée.

5. Procédé selon l'une des revendications 2 à 4, **caractérisé en ce que**, par rapport au bit le plus significatif (MSB), une zone binaire supérieure des bits, notamment une moitié supérieure des bits, d'au moins une des deux valeurs est renvoyée.

6. Procédé selon l'une des revendications précédentes, **caractérisé en ce que** le premier abonné (2) vérifie l'authenticité de la réponse reçue du second abonné (3).

7. Procédé selon l'une des revendications précédentes, **caractérisé en ce que** le premier abonné (2) vérifie si les données contenues dans la réponse et les données du résultat d'une seconde multiplication scalaire sont les coordonnées du même point.

8. Procédé selon l'une des revendications précédentes, **caractérisé en ce que** le premier abonné (2) compare les données contenues dans la réponse au résultat d'une seconde multiplication scalaire et **en ce que** le premier abonné (2) reconnaît l'authenticité du second abonné (3) si les données correspondantes de la réponse et du résultat de la seconde multiplication scalaire coïncident.

9. Procédé selon la revendication 8, **caractérisé en ce que**, pour comparer les données de la réponse au résultat de la seconde multiplication scalaire, on utilise uniquement les parties du résultat de la seconde multiplication scalaire qui correspondent à la partie de la réponse envoyée au premier abonné (2) par le second abonné (3).

**10.** Procédé selon l'une des revendications précédentes, **caractérisé en ce que** la partie du résultat de la première multiplication scalaire qui n'est pas retransmise comme réponse représente un résultat produit de manière aléatoire et connu d'au moins un des deux abonnés (2, 3), de préférence des deux abonnés (2, 3), qui peut être utilisé comme clé secrète dans des étapes de procédé ultérieures.

**11.** Procédé selon l'une des revendications précédentes, **caractérisé en ce que** le procédé est un procédé d'authentification basé sur un procédé de stimulation/réponse pour l'authentification du second abonné (3) vis-à-vis du premier abonné (2) et/ou inversement.

**12.** Procédé selon l'une des revendications précédentes, **caractérisé en ce que** la demande du premier abonné (2) est indépendante de la clé du second abonné (3).

**13.** Procédé selon l'une des revendications précédentes, **caractérisé en ce que** l'on dispose, en tant que paramètres de système du système de communication (1), d'une courbe elliptique convenant à des procédés cryptographiques et d'une coordonnée x affine d'un point de base de la courbe elliptique et d'une clé publique pour la vérification de la signature.

**14.** Procédé selon l'une des revendications précédentes, **caractérisé en ce que** l'on dispose uniquement, en tant que paramètres du second abonné (3), d'une clé connue du second abonné (3) et d'un certificat du second abonné (3).

**15.** Procédé selon la revendication 14, **caractérisé en ce que** le second abonné (3) transmet, en même temps que la réponse, le certificat du second abonné dont la validité est vérifiée dans le premier abonné en utilisant une clé publique connue des deux abonnés.

**16.** Système de communication (1) pour l'authentification des abonnés (2, 3) du système de communication (1) en utilisant une cryptographie selon l'une des revendications précédentes.

**17.** Système selon la revendication 16, **caractérisé en ce que** l'on prévoit un premier abonné (2) et au moins un second abonné (3) qui sont en liaison mutuelle de communication de données (4), le premier et le second abonnés (2, 3) étant pourvus chacun d'un module d'authentification (16, 17) pour une authentification.

**18.** Système selon la revendication 17, **caractérisé en ce que** le module d'authentification (16, 17) d'un abonné respectif (2, 3) comprend un dispositif de calcul qui est prévu pour les calculs, les vérifications et les authentifications à l'intérieur du module d'authentification (16, 17) respectif.

**19.** Système selon l'une des revendications relatives au système précédentes, **caractérisé en ce que** chaque abonné (2, 3) comprend une mémoire (18, 19) dans laquelle les paramètres de système ainsi que les paramètres associés à cet abonné respectif (2, 3) sont enregistrés.

**20.** Système selon l'une des revendications relatives au système précédentes, **caractérisé en ce que** les premier et second abonnés (2, 3) sont des abonnés de communication du système de communication (1), notamment d'un système de communication (1) réalisé en tant que système RFID.

**21.** Système selon l'une des revendications relatives au système précédentes, **caractérisé en ce que** le premier abonné (2) est une station de base (2) et le second abonné (3) est un transpondeur (3), notamment un transpondeur passif ou semi-passif (3).

## FIG 1A

$$y^2 = x^3 - 6x + 9$$

## FIG 1B

$$y^2 = x^3 - 6x + 3$$

# FIG 2

FIG 3

EP 2 067 095 B1

FIG 4

EP 2 067 095 B1

EP 2 067 095 B1

FIG 5A

X2       Z2

30 → | 1 0 1 0 | 1 0 1 1 | 0 1 1 1 | 0 1 0 1 |  (X2,Z2)

    32    33    34    35

FIG 5B

X2'      Z2

31 → | 1 0 1 1 | 0 1 1 1 | 0 1 0 1 |  (X2',Z2)

    33    34    35

!

FIG 5C =

X3       Z3

37 → | 1 0 1 0 | 1 0 1 1 | 0 1 1 1 | 0 1 0 1 |  (X3,Z3)

    38    39    40    41

18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10161138 A1

**In der Beschreibung aufgeführte Nicht-Patentliteratur**

- **von Klaus Finkenzeller.** RFID-Handbuch. Hansa-Verlag, 2002